# EUROPÄISCHE PATENTSCHRIFT

(11) **EP 1 830 047 B1**
(45) Veröffentlichungstag und Bekanntmachung des Hinweises auf die Patenterteilung: **15.10.2008**
(21) Anmeldenummer: 07102347.7
(22) Anmeldetag: 14.02.2007
(51) Int. Cl.: F02B 27/06, F02D 9/08, F02D 9/10, F16K 1/20

(54) **Drosselanordnung sowie damit ausgestattete Abgasanlage**
Throttle valve and exhaust system using the same
Clapet et dispositif d'èchappement l'utilisant

(30) Priorität: 21.02.2006 DE 102006008346
(43) Veröffentlichungstag der Anmeldung: 05.09.2007
(73) Patentinhaber: J. Eberspächer GmbH & Co. KG, 73730 Esslingen (DE)
(72) Erfinder: Hanitzsch, Robert, 71394, Kernen (DE); Damson, Björn, 70199, Stuttgart (DE)
(74) Vertreter: Bongen, Renaud & Partner

(56) Entgegenhaltungen:
- EP-A1- 0 622 538
- EP-A1- 0 657 317
- WO-A-99/63184
- FR-A1- 2 588 806

## Beschreibung

Die vorliegende Erfindung betrifft eine Drosselanordnung für eine Abgasanlage einer Brennkraftmaschine, insbesondere in einem Kraftfahrzeug, mit den Merkmalen des Oberbegriffs des Anspruchs 1. Die Erfindung betrifft außerdem eine mit einer derartigen Drosselanordnung ausgestattete Abgasanlage.

Aus der DE 103 04 364 A1 sind eine Drosselanordnung sowie eine Abgasanlage der eingangs genannten Art bekannt. Die bekannte Drosselanordnung umfasst eine Drosselklappe zum Drosseln einer durch ein Rohr strömenden Abgasströmung sowie eine die Drosselklappe in eine Schließstellung vorspannende Rückstellfeder. Dabei ist die Drosselklappe im Rohr zwischen der Schließstellung, in der sie einen vorgegebenen Querschnittsbereich des Rohrs zumindest teilweise verschließt, und einer Offenstellung, in der sie den Querschnittsbereich durch den Abgasdruck gegen die Federkraft der Rückstellfeder freigibt, um eine Schwenkachse schwenkbar. Bei der bekannten Drosselanordnung ist die Rückstellfeder als Schenkelfeder ausgestaltet, deren Schraubenfederabschnitt koaxial zu einer Welle angeordnet ist, die sich ihrerseits koaxial zur Schwenkachse der Drosselklappe erstreckt. Dabei ist die Welle in einer zur Abgasströmung hin offenen seitlichen Ausnehmung des Rohrs angeordnet. Die Schenkelfeder stützt sich mit dem einen freien Schenkel an einem mit der Drosselklappe fest verbundenen Hebel und mit dem anderen freien Schenkel an einer Wand der vorgenannten Ausnehmung ab. Die Rückstellfeder ist somit klappenseitig an dem Hebel und rohrseitig am Rohr bzw. an einer Lagerung zur Aufnahme der Welle abgestützt.

Es hat sich gezeigt, dass es im Betrieb der Drosselanordnung beim Verstellen der Drosselklappe zu Reibungserscheinungen einerseits zwischen der Rückstellfeder und dazu benachbarten Komponenten und andererseits zwischen der Drosselklappe und dem Rohr kommt. Zum einen kann insbesondere der Schraubenfederabschnitt der Rückstellfeder an der Welle schleifen. Aufgrund der im Betrieb der Brennkraftmaschine auftretenden häufigen Verstellbewegungen der Drosselklappe kann es zu einem Abrieb und somit zu einer Materialschwächung der Rückstellfeder kommen. Eine Materialschwächung in einem für die Federelastizität wichtigen Bereich der Rückstellfeder kann deren Federkennlinie verändern, was sich auf die Funktion der Drosselanordnung nachteilig auswirkt. Beispielsweise können eine oder mehrere Windungen des Schraubenfederabschnitts durch die Reibung an der Welle geschwächt werden, wodurch die Schenkelfeder eine weichere Kennlinie erhält. Im Extremfall kann die fortgesetzte Reibung die Rückstellfeder zerstören. Beispielsweise bricht die Schenkelfeder in ihrem Schraubenfederabschnitt. Die Rückstellfeder ist dann so gut wie wirkungslos und die Drosselanordnung fällt dann aus. Zum anderen kann auch die Drosselklappe am Rohr schleifen, wodurch diese schwergängig wird und mit zunehmender Verschmutzung klemmen und letztlich festsitzen kann. Auch dadurch kann die Effektivität der Drosselanordnung bis zu deren Totalausfall geschwächt werden.

Die vorliegende Erfindung beschäftigt sich mit dem Problem, für eine Drosselanordnung bzw. für eine damit ausgestattete Abgasanlage eine verbesserte Ausführungsform anzugeben, die sich insbesondere durch eine erhöhte Lebenszeit für die Drosselanordnung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Rückstellfeder rohrseitig symmetrisch abzustützen. Dies hat zur Folge, dass die Rückstellfeder rohrseitig symmetrisch belastet ist, was es insbesondere ermöglicht, Kippmomente um eine quer zur Schwenkachse verlaufende Kippachse zu vermeiden oder zumindest zu reduzieren; ebenso lassen sich Axialverschiebungen in Richtung der Schwenkachse vermeiden. Hierdurch lässt sich eine Kontaktierung und somit eine Reibung einerseits zwischen der Rückstellfeder und ihrer rohrseitigen Abstützung und andererseits zwischen der Drosselklappe und dem Rohr vermeiden bzw. reduzieren. Bei einer einfachen und somit asymmetrisch abgestützten Schenkelfeder führt besagtes Kippmoment dazu, dass sich die Längsachse ihres Schraubenfederabschnitts räumlich um die Kippachse dreht, wodurch die Schenkelfeder in ihrem Schraubenabschnitt an der koaxial durch den Schraubenfederabschnitt verlaufenden Welle zur Anlage kommt und daran reibt. Außerdem bewirkt dieses Kippmoment eine Axialverschiebung der Drosselklappe sowie ein Kippen der Drosselklappe relativ zum Rohr. Durch die erfindungsgemäß vorgeschlagene Abstützung, die bezüglich einer sich im Bereich der klappenseitigen Abstützung der Rückstellfeder erstreckenden Symmetrieebene spiegelsymmetrisch ausgestaltet ist, lassen sich derartige Relativverstellungen reduzieren oder vermeiden. Abrasive Reibungseffekte lassen sich dadurch reduzieren, was die Lebensdauer der Drosselanordnung erhöht.

Bei einer vorteilhaften Ausführungsform kann die Rückstellfeder durch eine Doppelschenkelfeder gebildet sein, die zwei über einen Bügelabschnitt miteinander verbundene Schraubenfederabschnitte aufweist. Die Doppelschenkelfeder stützt sich über den Bügelabschnitt klappenseitig ab, während sie sich über zwei freie Schenkel rohrseitig abstützt. Die beiden Schraubenfederabschnitte bauen jeweils für sich bezüglich ihrer Schraubenlängsrichtung relativ kurz, wodurch auch die Gefahr vergleichsweise großer Relativbewegungen reduziert ist.

Entsprechend einer vorteilhaften Weiterbildung der als Doppelschenkelfeder ausgestalteten Rückstellfeder kann insbesondere vorgesehen sein, die Schraubenfederabschnitte zwischen dem Bügel und den freien Schenkeln freistehend anzuordnen, wodurch eine Kontaktierung der Schraubenfederabschnitte mit anderen Bauteilen, wie z. B. der Lagerung, vermieden werden kann. Diese freistehende Anordnung wird durch die symmetrische Kraftabstützung ermöglicht.

Bei einer alternativen Ausführungsform kann die Rückstellfeder als Blattfeder ausgestaltet sein, die sich über einen freien Endabschnitt klappenseitig und insbesondere über einen festgelegten Halteabschnitt rohrseitig, abstützt. Eine Blattfeder lässt sich besonders einfach so ausgestalten, dass bewegliche Bereiche - abgesehen vom Endabschnitt - bezüglich anderer Komponenten kontaktfrei und somit reibungsfrei sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung einer Brennkraftmaschine mit Abgasanlage,
- Fig. 2: eine Draufsicht auf eine Drosselanordnung,
- Fig. 3: eine Seitenansicht der Drosselanordnung aus Fig. 2,
- Fig. 4: eine Draufsicht auf eine andere Drosselanordnung,
- Fig. 5: eine perspektivische Ansicht auf die Drosselanordnung aus Fig. 4.

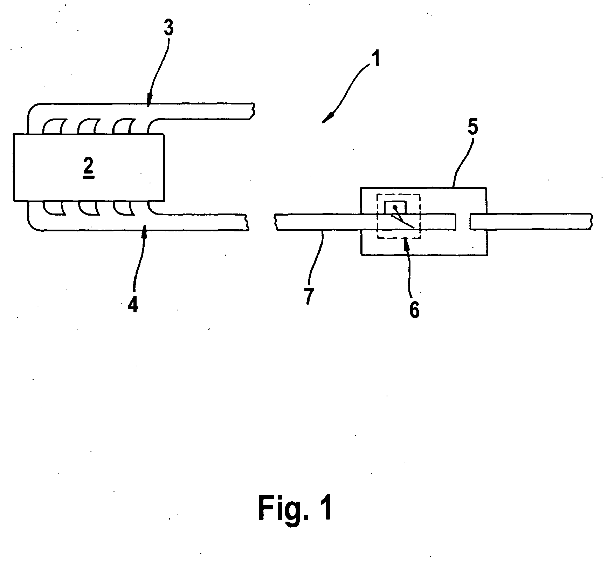

Entsprechend Fig. 1 umfasst eine Brennkraftmaschine 1 einen Motorblock 2, an den eine Frischgasanlage 3 zum Zuführen von Frischgas, insbesondere Frischluft, und eine Abgasanlage 4 zum Abführen von Abgas angeschlossen sind. Die Brennkraftmaschine 1 ist vorzugsweise in einem Kraftfahrzeug angeordnet. Die Abgasanlage 4 enthält in üblicher, hier nicht gezeigter Weise Abgasreinigungseinrichtungen, wie z. B. ein Partikelfilter und/oder wenigstens einen Katalysator, sowie Schalldämpfereinrichtungen. Exemplarisch ist hier ein Nachschalldämpfer 5 wiedergegeben. Die Abgasanlage 4 weist zumindest eine Drosselanordnung 6 auf, mit deren Hilfe in einem Rohr 7 der Abgasanlage 4 der Abgasstrom in Abhängigkeit des Abgasdrucks steuerbar ist. Das Rohr 7 ist dabei durch einen Abgasstrang der Abgasanlage 4 gebildet. Im gezeigten Beispiel ist die Drosselanordnung 6 im Nachschalldämpfer 5 angeordnet. Grundsätzlich ist auch eine andere Positionierung der Drosselanordnung 6 innerhalb des Abgasanlage 4 möglich.

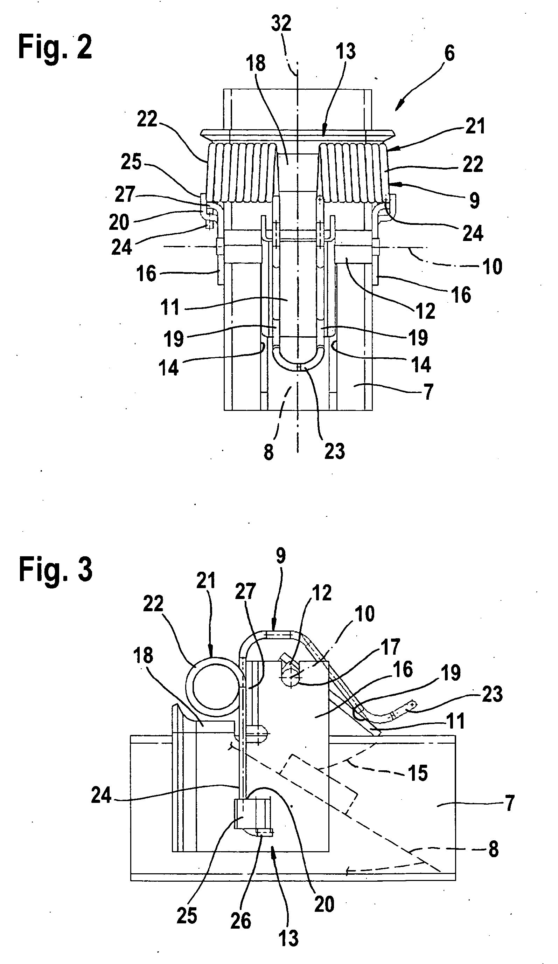

Entsprechend den Fig. 2 bis 5 umfasst die Drosselanordnung 6 eine Drosselklappe 8 und eine Rückstellfeder 9. Die Drosselklappe 8 ist im Rohr 7, von dem hier nur ein kleiner Abschnitt dargestellt ist und das hier einen Rechteckquerschnitt aufweist, angeordnet und dient darin zum Drosseln einer durch das Rohr 7 strömenden Abgasströmung. Die Rückstellfeder 9 wirkt direkt oder indirekt mit der Drosselklappe 8 zusammen und spannt diese in eine hier gezeigte Schließstellung vor.

Die Drosselklappe 8 ist im Rohr 7 zwischen besagter Schließstellung und einer Offenstellung um eine Schwenkachse 10 verschwenkbar. In der Schließstellung verschließt die Drosselklappe 8 einen vorgegebenen Querschnittsbereich, vorzugsweise den gesamten durchströmbaren Querschnitt des Rohrs 7, zumindest teilweise. Vorzugsweise verschließt die Drosselklappe 8 in ihrer Schließstellung den Querschnittsbereich bzw. das Rohr 7 möglichst vollständig. In ihrer Offenstellung gibt die Drosselklappe 8 den Querschnittsbereich mehr oder weniger frei. In die Offenstellung ist die Drosselklappe 8 durch den stromauf der Drosselklappe 8 herrschenden Abgasdruck gegen die Federkraft der Rückstellfeder 9 angetrieben. Die Drosselanordnung 6 dient in der Abgasanlage 4 hauptsächlich zur Schalldämpfung.

Die Drosselklappe 8 ist bei den hier gezeigten, bevorzugten Ausführungsformen an einem Hebel 11 befestigt, der um die Schwenkachse 10 schwenkbar gelagert ist. Diese Schwenkachse 10 erstreckt sich quer zur Hauptströmungsrichtung der Abgase. In den gezeigten Ausführungsformen erstreckt sich die Schwenkachse 10 außerhalb des Rohrs 7. Zur Realisierung der Schwenkachse 10 ist eine Welle 12 vorgesehen, die sich koaxial zur Schwenkachse 10 erstreckt und die in einer Lagerung 13 aufgenommen ist. Beispielsweise ist die Welle 12 an der Lagerung 13 um die Schwenkachse 10 drehbar gelagert, während sie mit dem Hebel 11 drehfest gekoppelt ist. Die drehfeste Verbindung zwischen Welle 12 und Hebel 11 wird hier durch eine Außenmehrkante-Struktur der Welle 12 erreicht; ebenso ist auch eine andere Formschlussverbindung oder eine Schweißverbindung oder dgl. möglich.

Die Drosselklappe 8 weist an ihren seitlichen Längskanten jeweils nicht näher bezeichnete Seitenwangen auf, die an einer vom Hebel 11 abgewandten Seite von der Drosselklappe 8 im wesentlichen senkrecht abstehen und sich dabei parallel zu Seitenwänden des Rohrs 7 erstrecken. Hierdurch ergibt sich eine Führung und Stabilisierung der Drosselklappe 8 innerhalb des Rohrs 7.

Der Hebel 11 ist über zwei nicht näher bezeichnete Wangen mit der Drosselklappe 8 verbunden. Hierzu erstreckt sich der Hebel 11 mit den Wangen durch schlitzförmige Seitenöffnungen 14 des Rohrs 7 hindurch. Die Wangen besitzen bezüglich der Schwenkachse 10 eine Kreisbogenkontur 15, wodurch die Seitenöffnungen 14 vergleichsweise klein ausgestaltet werden können.

Die Lagerung 13 ist hier durch ein sattelförmiges Bauteil gebildet, das bezüglich des Rohrs 7 ein separates Bauteil ist und auf das Rohr 7 aufgesetzt ist. Die Lagerung 13 kann auf geeignete Weise am Rohr 7 befestigt sein, z. B. durch Verlöten, Verschweißen, Verkleben oder durch Verklemmen. Zur Aufnahme der Welle 12 weist die Lagerung 13 an zwei parallel über das Rohr 7 vorstehenden Seitenteilen 16 jeweils eine einseitig offene U-förmige Aussparung 17 auf. In diese Aussparungen 17 ist die Welle 12 an ihren axialen Endabschnitten eingesetzt. Die beiden Seitenteile 16 sind über ein parallel zur Schwenkachse 10 verlaufendes Brückenteil 18 miteinander verbunden, welches das Rohr 7 an der Seite der Welle 12 überbrückt.

Die Rückstellfeder 9 ist klappenseitig an der Drosselklappe 8 oder wie hier am Hebel 11 abgestützt. Eine entsprechende Abstützung ist hier mit 19 bezeichnet. Rohrseitig ist die Rückstellfeder 9 am Rohr 7 oder wie hier an der Lagerung 13 abgestützt. Eine entsprechende Abstützung ist hier mit 20 bezeichnet.

Die Rückstellfeder 9 ist bei den hier gezeigten Ausführungsformen jeweils so ausgestaltet, dass sie rohrseitig die Federkräfte bezüglich einer Symmetrieebene 32 im wesentlichen spiegelsymmetrisch abstützt. Besagte Symmetrieebene 32 erstreckt sich einerseits senkrecht zur Schwenkachse 10 und liegt andererseits im Bereich der klappenseitigen Abstützung 19. Durch die rohrseitige symmetrische Abstützung der Federkräfte lassen sich Kippmomente um eine quer zur Schwenkachse 10 verlaufende Kippachse innerhalb der Rückstellfeder 9 vermeiden oder reduzieren, wodurch die Rückstellfeder 9 auch beim Auf- und Zuschwenken der Drosselklappe 8 relativ lagestabil ist. Des Weiteren ist dadurch auch die Relativlage der Drosselklappe 8 stabilisiert; insbesondere lassen sich Axialverschiebungen der Welle 12 und somit des Hebels 11 und der Drosselklappe 8 vermeiden. Reibungsbedingter Verschleiß lässt sich dadurch reduzieren.

Die Rückstellfeder 9 ist bei den hier gezeigten Ausführungsformen jeweils aus einem Stück hergestellt. Des Weiteren besitzt jede Drosselanordnung 6 jeweils nur eine einzige Rückstellfeder 9. Auch die Rückstellfeder 9 selbst ist bei den hier gezeigten Ausführungsformen zumindest in einem die Federkraft erzeugenden Federabschnitt bezüglich der Symmetrieebene 32 spiegelsymmetrisch ausgestaltet.

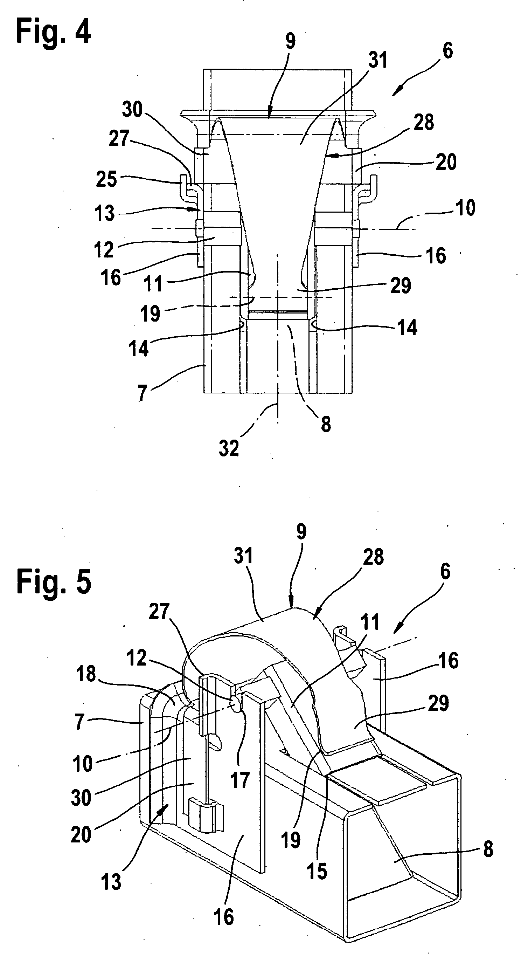

Bei der in Fig. 2 gezeigten Ausführungsform stützt sich die Rückstellfeder 9 klappenseitig über zwei in der Längsrichtung der Schwenkachse 10 voneinander beabstandete und bezüglich der Schwenkachse 10 äquidistante Berührungspunkte ab, welche somit die klappenseitige Abstützung 19 bilden. Bei der in den Fig. 4 und 5 gezeigten Ausführungsform stützt sich die Rückstellfeder 9 beispielsweise über eine Berührungslinie am Hebel 11 ab, die sich parallel zur Schwenkachse 10 erstreckt und die hier die klappenseitige Abstützung 19 bildet. Ebenso ist eine Ausführungsform möglich, bei der sich die Rückstellfeder 9 klappenseitig nur über einen einzigen zentralen Berührungspunkt abstützt. Die Berührungspunkte bzw. die Berührungslinie 19 können beim Schwenkverstellen der Drosselklappe 8 in radialer Richtung entlang des Hebels 11 wandern. Um hier Verschleiß zu reduzieren, kann der Hebel 11 bzw. die Rückstellfeder 9 im entsprechenden Bereich besonders glatt und insbesondere mit einer geeigneten Gleitbeschichtung versehen sein. Die Berührungslinie bzw. die Berührungspunkte 19 sind zweckmäßig ebenfalls spiegelsymmetrisch zur Symmetrieebene 32 angeordnet.

Bei einer Weiterbildung kann die Welle 12 an der Lagerung 13 in den Ausnehmungen 17 durch die Rückstellfeder 9 gesichert sein, was hier insbesondere bei der in den Fig. 4 und 5 gezeigten Ausführungsform realisiert ist. Des Weiteren ist die Rückstellfeder 9 vorzugsweise selbsthaltend an der Lagerung 13 angebracht. Beispielsweise kann die Rückstellfeder 9 hierzu an die Lagerung 13 angesteckt oder angeclipst oder mit dieser verrastet sein. Zusätzliche Befestigungsmaßnahmen sind dann nicht erforderlich.

Bei der in den Fig. 2 und 3 gezeigten Ausführungsform ist die Rückstellfeder 9 als Doppelschenkelfeder 21 ausgestaltet, die sich durch zwei Schraubenfederabschnitte 22, einen gemeinsamen Bügel 23 und zwei freie Schenkel 24 charakterisiert. Der Bügel 23 verbindet die beiden Schraubenfederabschnitte 23 miteinander und ist an der Drosselklappe 8 bzw. am Hebel 11 abgestützt. Der Bügel 23 ist hier so geformt, dass sich die gewünschte punktförmige Kontaktierung mit dem Hebel 11 ergibt. Die Doppelschenkelfeder 21 ist an der Lagerung 13 gehaltert. Hierzu stützt sich die Doppelschenkelfeder 21 mit einem ihrer freien Schenkel 24 oder vorzugsweise mit beiden freien Schenkeln 24 jeweils an einem Widerlager 25 der Lagerung 13 unter Vorspannung ab. Besagtes Widerlager 25 ist beispielsweise durch eine frei geschnittene und ausgestellte Lasche an der Lagerung 13 ausgebildet. Zumindest der in Fig. 3 dem Betrachter zugewandte freie Schenkel 24 weist an seinem freien Ende einen abgewinkelten Endabschnitt 26 auf, der das Widerlager 25 seitlich übergreift, wodurch die Doppelschenkelfeder 9 gegen unbeabsichtigtes Abziehen an der Lagerung 13 gesichert ist.

Grundsätzlich ist auch eine Ausführungsform denkbar, bei welcher zumindest einer der freien Schenkel 24 die Welle 12 an der Lagerung 13 radial sichert. Beispielsweise kann der jeweilige Schenkel 24 die Welle 12 hierzu an der offenen Seite der Aussparung 17 übergreifen, wozu er z.B. unter dem Brückenteil 18 hindurchgeführt sein kann. Ebenso ist eine Ausführungsform möglich, bei welcher der eine Schenkel 24 mit dem Widerlager 25 zusammenwirkt, während der andere Schenkel 24 die Welle 12 radial sichert. Ebenso können beide Schenkel 24 sowohl jeweils an einem solchen Widerlager 25 abgestützt sein als auch die gewünschte radiale Sicherung der Welle 12 bewirken.

Zumindest für den in Fig. 3 dem Betrachter zugewandten Schenkel 24 ist am Seitenteil 16 der Lagerung 13 außerdem eine Anlagekontur 27 ausgebildet, beispielsweise durch einen abgewinkelten Abschnitt des Seitenteils 16. Hierdurch lässt sich die Positionierung der Doppelschenkelfeder 21 relativ zur Lagerung 13 verbessern.

Bei der hier gezeigten, besonders vorteilhaften Ausführungsform sind die Schraubenfederabschnitte 22 der Doppelschenkelfeder 21 außerhalb der Welle 12 angeordnet. Zwar erstrecken sich die Längsmittelachsen der Schraubenfederabschnitte 22 parallel zur Schwenkachse 10, jedoch exzentrisch dazu. Besonders vorteilhaft ist die hier gezeigte Ausführungsform, bei welcher die Schraubenfederabschnitte 22 zwischen dem Bügel 23 und ihren freien Schenkeln 24 freistehend angeordnet sind. Die Schraubenfederabschnitte 22 sind somit ohne Kontakt zu anderen Bestandteilen oder Komponenten der Drosselanordnung 6.

Der weiter oben genannte Federabschnitt, der die Federkraft in der Rückstellfeder 9 erzeugt, ist bei der Doppelschenkelfeder 21 durch den Bügel 23 und die Schraubenfederabschnitte 22 gebildet. Zumindest in diesem Federabschnitt ist die Doppelschenkelfeder 21 bezüglich der Symmetrieebene spiegelsymmetrisch ausgestaltet.

Bei der in den Fig. 4 und 5 gezeigten Ausführungsform ist die Rückstellfeder 9 als Blattfeder 28 ausgestaltet. Die Blattfeder 28 umfasst einen Endabschnitt 29 und einen Halteabschnitt 30 sowie einen zwischen Endabschnitt 29 und Halteabschnitt 30 verlaufenden Mittelabschnitt 31. Der Mittelabschnitt 31 bildet zusammen mit dem Endabschnitt 29 den die Federkraft erzeugenden Federabschnitt, der vorzugsweise spiegelsymmetrisch zur Symmetrieebene 32 ausgestaltet ist. Mit dem Endabschnitt 29 ist die Blattfeder 28 an der Drosselklappe 8 bzw. am Hebel 11 abgestützt.

Mit ihrem Halteabschnitt 30 ist die Blattfeder 28 an der Lagerung 13 gehaltert, und zwar außerhalb des Rohrs 7. Der Halteabschnitt 30 ist hier als U-Profil ausgestaltet, das die Lagerung 13 im Bereich des Brückenteils 18 übergreift. Dabei kann der Halteabschnitt 30 an die Lagerung 13 angeclipst oder damit verschweißt oder verlötet sein. Insbesondere wirkt der Halteabschnitt 30 hier in axialer Richtung wieder mit einer Anlagekontur 27 zusammen und kann in eine Lasche 25 eingreifen bzw. an einem Widerlager 25 abgestützt sein.

Am Halteabschnitt 30 kann ein Sicherungsabschnitt ausgebildet sein, der sich beispielsweise parallel zum Rohr 7 erstreckt. Dieser Sicherungsabschnitt kann so ausgestaltet sein, dass er die Welle 12 an der Lagerung 13 radial sichert. Beispielsweise übergreift der Sicherungsabschnitt die Welle 12 im Bereich der offenen Seite der Aussparung 17. Des Weiteren kann der Sicherungsabschnitt auch zur Realisierung einer axialen Sicherung der Welle 12 ausgebildet sein. Bei zwei symmetrisch angeordneten Sicherungsabschnitten lässt sich auch eine axiale Zentrierung der Welle 12 realisieren.

## Patentansprüche

1. Drosselanordnung für eine Abgasanlage (4) einer Brennkraftmaschine (1), insbesondere in einem Kraftfahrzeug,
- mit einer Drosselklappe (8) zum Drosseln einer durch ein Rohr (7) strömenden Abgasströmung,
- mit einer die Drosselklappe (8) in eine Schließstellung vorspannenden Rückstellfeder (9),
- wobei die Drosselklappe (8) im Rohr (7) zwischen der Schließstellung, in der sie einen vorgegebenen Querschnittsbereich des Rohrs (7) zumindest teilweise verschließt, und einer Offenstellung, in der sie den Querschnittsbereich durch den Abgasdruck gegen die Federkraft der Rückstellfeder (9) freigibt, um eine Schwenkachse (10) schwenkbar ist,
- wobei die Rückstellfeder (9) klappenseitig an der Drosselklappe (8) oder an einem mit der Drosselklappe (8) fest verbundenen Hebel (11) und rohrseitig am Rohr (7) oder an einer Lagerung (13) zur Aufnahme einer sich koaxial zur Schwenkachse (10) erstreckenden Welle (12) abgestützt ist,
**dadurch gekennzeichnet,**
**dass** die Rückstellfeder (9) so ausgestaltet ist, dass sie die Federkräfte rohrseitig bezüglich einer sich senkrecht zur Schwenkachse (10) erstreckenden und im Bereich einer klappenseitigen Abstützung (19) liegenden Symmetrieebene (32) spiegelsymmetrisch abstützt.

2. Drosselanordnung nach Anspruch 1,
**dadurch gekennzeichnet,**
- **dass** nur eine einzige Rückstellfeder (9) vorgesehen ist, die außerdem aus einem Stück hergestellt ist, und/oder
- **dass** die Rückstellfeder (9) zumindest in einem die Federkraft erzeugenden Federabschnitt bezüglich der Symmetrieebene (32) spiegelsymmetrisch ausgestaltet ist, und/oder
- **dass** sich die Rückstellfeder (9) an der Drosselklappe (8) oder an dem Hebel (11) entweder über einen einzigen zentralen Berührungspunkt oder über eine sich parallel zur Schwenkachse (10) erstreckende Berührungslinie (19) oder über wenigstens zwei in der Längsrichtung der Schwenkachse (10) voneinander beabstandete und bezüglich der Schwenkachse (10) äquidistante Berührungspunkte (19) abstützt.

3. Drosselanordnung nach Anspruch 2,
**dadurch gekennzeichnet,**
**dass** die Berührungslinie (19) oder die Berührungspunkte (19) bezüglich der Symmetrieebene (32) spiegelsymmetrisch angeordnet sind.

4. Drosselanordnung nach einem der Ansprüche 1 bis 3,
**dadurch gekennzeichnet,**
- **dass** sich die Schwenkachse (10) außerhalb des Rohrs (7) erstreckt, und/oder
- **dass** der Hebel (11) das Rohr (7) in wenigstens einer Seitenöffnung (14) durchdringt und drehfest mit der Welle (12) verbunden ist, die außerhalb des Rohrs (7) an der Lagerung (13) um die Schwenkachse (10) drehbar gelagert ist, und/oder
- **dass** die Welle (12) in der Lagerung (13) durch die Rückstellfeder (9) gesichert ist, und/oder
- **dass** die Rückstellfeder (9) selbsthaltend an der Lagerung (13) angebracht und/oder daran angesteckt oder angeclipst oder mit dieser verrastet ist.

5. Drosselanordnung nach einem der Ansprüche 1 bis 4,
**dadurch gekennzeichnet,**
**dass** die Rückstellfeder (9) als Doppelschenkelfeder (21) ausgestaltet ist, die zwei Schraubenfederabschnitte (22) aufweist, die über einen Bügel (23) miteinander verbunden sind, der sich an der Drosselklappe (8) oder am Hebel (11) abstützt.

6. Drosselanordnung nach Anspruch 5,
**dadurch gekennzeichnet,**
- **dass** die Doppelschenkelfeder (21) an der außerhalb des Rohrs (7) angeordneten Lagerung (13) gehaltert ist, und/oder
- **dass** die Doppelschenkelfeder (21) mit wenigstens einem ihrer freien Schenkel (24) unter Vorspannung an einem Widerlager (25) der Lagerung (13) abgestützt ist, und/oder
- **dass** die Doppelschenkelfeder (21) mit wenigstens einem ihrer freien Schenkel (24) die Welle (12) an der Lagerung (13) radial sichert, und/oder
- **dass** die Schraubenfederabschnitte (22) außerhalb der Welle (12) angeordnet sind, und/oder
- **dass** die Schraubenfederabschnitte (22) zwischen dem Bügel (23) und den freien Schenkeln (24) freistehend angeordnet sind.

7. Drosselanordnung nach einem der Ansprüche 1 bis 4,
**dadurch gekennzeichnet,**
**dass** die Rückstellfeder (9) als Blattfeder (28) ausgestaltet ist, die sich mit einem Endabschnitt (29) an der Drosselklappe (8) oder am Hebel (11) abstützt.

8. Drosselanordnung nach Anspruch 7,
**dadurch gekennzeichnet,**
- **dass** die Blattfeder (28) einen Halteabschnitt (30) aufweist, mit dem sie außerhalb des Rohrs (7) an der Lagerung (13) gehaltert ist, und/oder
- **dass** die Blattfeder (28) an ihrem Halteabschnitt (30) wenigstens einen Sicherungsabschnitt aufweist, mit dem sie die Welle (12) an der Lagerung (13) radial sichert und/oder axial zentriert und/oder axial sichert.

9. Abgasanlage für eine Brennkraftmaschine (1), insbesondere in einem Kraftfahrzeug, mit wenigstens einem Abgas von der Brennkraftmaschine (1) abführenden Abgasstrang, in dem zumindest eine Drosselanordnung (6) nach einem der Ansprüche 1 bis 8 angeordnet ist.

## Claims

1. A throttle arrangement for an exhaust system (4) of an internal combustion engine (1), in particular in a motor vehicle,
- having a throttle valve (8) for throttling a stream of exhaust gas flowing through a pipe (7),
- having a restoring spring (9) which prestresses the throttle valve (8) into a closed position,
- whereby the throttle valve (8) in the pipe (7) can be pivoted about a pivot axis (10) between the closed position, in which it at least partially closes a predetermined cross-sectional area of the pipe (7), and an open position, in which it releases the cross-sectional area due to the pressure of the exhaust gas against the spring force of the restoring spring (9),
- whereby the restoring spring (9) is supported on the throttle valve (8) on the valve end or on a lever (11) fixedly connected to the throttle valve (8) and on the pipe end is supported on the pipe (7) or on a bearing (13) for accommodating a shaft (12) extending coaxially with the pivot axis (10),
**characterized in that**
the restoring spring (9) is designed so that it supports the spring forces on the pipe end symmetrically with regard to a plane of symmetry (32) running perpendicular to the pivot axis (10) in the area of a support (19) on the valve end.

2. The throttle arrangement according to Claim 1,
**characterized in that**
- only a single restoring spring (9) is provided and it is also made of one piece and/or
- the restoring spring (29) is designed to be symmetrical with respect to the plane of symmetry (32), at least in a spring section that produces the spring force and/or
- the restoring spring (9) is supported on the throttle valve (8) or on the lever (11) via either a single central contact point or a line of contact (19) extending parallel to the pivot axis (10) or at least two contact points (19) that are spaced a distance apart in the longitudinal direction of the pivot axis (10) and are equidistant with respect to the pivot axis (10).

3. The throttle arrangement according to Claim 2,
**characterized in that**
the line of contact (19) or the contact points (19) are arranged so they are symmetrical with respect to the plane of symmetry (32).

4. The throttle arrangement according to any one of Claims 1 through 3,
**characterized in that**
- the pivot axis (10) extends outside of the pipe (7) and/or
- the lever (11) penetrates through the pipe (7) in at least one side opening (14) and is attached to the shaft (12) in a rotationally fixed manner, whereby the shaft is mounted on the bearing (13) to rotate about the pivot axis (10) outside of the pipe (7) and/or
- the shaft (12) is secured in its bearing (13) by the restoring spring (9) and/or
- the restoring spring (9) is mounted on the bearing (13) in a self-retaining manner and/or is attached or clipped or locked onto the bearing.

5. The throttle arrangement according to any one of Claims 1 through 4,
**characterized in that**
the restoring spring (9) is designed as a double-leg spring (21) having two helical spring sections (22) joined together by a strap (23) that is supported on the throttle valve (8) or on the lever (11).

6. The throttle arrangement according to Claim 5,
**characterized in that**
- the double-leg spring (21) is held on the bearing (13) arranged outside of the pipe (7) and/or
- the double-leg spring (21) is supported on an abutment (25) of the bearing (13) with at least one of its free legs (24) under a prestress and/or
- the double-leg spring (21) secures the shaft (12) radially on the bearing (13) with at least one of its free legs (24) and/or
- the helical spring sections (22) are arranged outside of the shaft (12) and/or
- the helical spring sections (22) are arranged so they are free-standing between the strap (23) and the free legs (24).

7. The throttle arrangement according to any one of Claims 1 through 4,
**characterized in that**
the restoring spring (9) is designed as a plate spring (28) which is supported on the throttle valve (8) or on the lever (11) with an end section (29).

8. The throttle arrangement according to Claim 7,
**characterized in that**
- the plate spring (28) has a holding section (30) with which it is held on the bearing (13) outside of the pipe (7) and/or
- the plate spring (28) has at least one securing section on its holding section (30) with which it secures the shaft (12) radially on the bearing (12) and/or centers it axially and/or secures it axially.

9. The exhaust system for an internal combustion engine (1) in particular in a motor vehicle having at least one exhaust line carrying exhaust gas away from the internal combustion engine (1), in which at least one throttle arrangement (6) according to any one of Claims 1 through 8 is situated.

## Revendications

1. Dispositif d'étranglement pour une installation de gaz d'échappement (4) d'un moteur à combustion interne (1), en particulier sur un véhicule automobile, comprenant
- un clapet d'étranglement (8) pour l'étranglement d'un écoulement de gaz brûlés circulant à travers un tuyau (7),
- un ressort de rappel (9) prétendant le clapet d'étranglement (8) dans une position de fermeture
- le clapet d'étranglement (8) pouvant basculer autour d'un axe de pivotement (10) dans le tuyau (7) entre la position de fermeture, dans laquelle il ferme au moins partiellement une zone de section prédéfinie du tuyau (7), et une position ouverte, dans laquelle il libère la zone de section par la pression de gaz brûlés contre la force de ressort du ressort de rappel (9),
- le ressort de rappel (9) étant soutenu côté clapet sur le clapet d'étranglement (8) ou sur un levier (11) relié de façon fixe au clapet d'étranglement (8) et côté tuyau sur le tuyau (7) ou sur une fixation (13) pour le logement d'un arbre (12) s'étendant coaxialement par rapport à l'axe de pivotement (10),
**caractérisé en ce que**
le ressort de rappel (9) est conçu de telle sorte qu'il soutient de façon symétrique les forces de rappel côté tuyau par rapport à un plan de symétrie (32) s'étendant perpendiculairement à l'axe de pivotement (10) et disposé dans la zone d'un soutien (19) côté clapet.

2. Dispositif d'étranglement selon la revendication 1
**caractérisé en ce que**
- seul un ressort de rappel (9) unique est prévu, qui est fabriqué également d'une seule pièce, et/ou
- **en ce que** le ressort de rappel (9) est conçu de façon symétrique au moins dans une partie de ressort générant la force de ressort par rapport au plan de symétrie (32), et/ou
- **en ce que** le ressort de rappel (9) s'appuie sur le clapet d'étranglement (8) ou sur le levier (11) soit au moyen d'un unique point contact central soit au moyen d'une ligne de contact (19) s'étendant parallèlement à l'axe de pivotement (10) soit au moyen d'au moins deux points de contact (19) espacés l'un de l'autre dans le sens longitudinal de l'axe de pivotement (10) et équidistants par rapport à l'axe de pivotement (10).

3. Dispositif d'étranglement selon la revendication 2,
**caractérisé en ce que**,
la ligne de contact (19) ou les points de contact (19) sont disposés de façon symétrique par rapport au plan de symétrie (32).

4. Agencement d'étranglement selon l'une quelconque des revendications 1 à 3,
**caractérisé en ce que**
- l'axe de pivotement (10) s'étend à l'extérieur du tuyau (7), et/ou
- **en ce que** le levier (11) traverse le tuyau (7) dans au moins une ouverture latérale (14) et est relié de façon solidaire en rotation à l'arbre (12), qui est logé à l'extérieur du tuyau (7) sur la fixation (13) de façon à pouvoir tourner autour de l'axe de pivotement (10), et/ou
- **en ce que** l'arbre (12) est bloqué dans la fixation (13) par le ressort de rappel (9), et/ou
- **en ce que** le ressort de rappel (9) est placé de façon autobloquante sur la fixation (13) et/ou est enfiché ou clipsé dessus ou est encliqueté avec celle-ci.

5. Dispositif d'étranglement selon l'une quelconque des revendications 1 à 4,
**caractérisé en ce que**,
le ressort de rappel (9) est conçu comme ressort à double branche (21), qui présente deux parties de ressort hélicoïdal (22), qui sont reliées l'une à l'autre au moyen d'une bride (23), laquelle s'appuie sur le clapet d'étranglement (8) ou sur le levier (11).

6. Dispositif d'étranglement selon la revendication 5,
**caractérisé en ce que**
- le ressort à double branche (21) est fixé sur la fixation (13) disposée à l'extérieur du tuyau (7), et/ou
- **en ce que** le ressort à double branche (21) est soutenu par au moins sa branche (24) libre sous pré-tension sur une butée (25) de la fixation (13), et/ou
- **en ce que** le ressort à double branche (21) bloque radialement l'arbre (12) par au moins sa branche (24) libre sur la fixation (13), et/ou
- **en ce que** les parties de ressort hélicoïdal (22) sont disposées à l'extérieur de l'arbre (12), et/ou
- **en ce que** les parties de ressort hélicoïdal (22) sont disposées librement entre la bride (23) et les branches (24) libres.

7. Dispositif d'étranglement selon l'une quelconque des revendications 1 à 4,
**caractérisé en ce que**
le ressort de rappel (9) est conçu sous forme de lame à ressort (28), qui s'appuie par une partie d'extrémité (29) sur le clapet d'étranglement (8) ou sur le levier (11).

8. Dispositif d'étranglement selon la revendication 7,
**caractérisé en ce que**
- la lame de ressort (28) présente une partie de retenue (30), par laquelle il est maintenu à l'extérieur du tuyau (7) sur la fixation (13), et/ou
- **en ce que** le ressort de rappel (28) présente sur sa partie de retenue (30) au moins une partie de blocage, par laquelle il bloque radialement l'arbre (12) sur la fixation (13) et/ou le centre axialement et/ou le bloque axialement.

9. Installation de gaz brûlés pour un moteur à combustion interne (1), en particulier sur un véhicule automobile, comprenant une branche de gaz brûlés évacuant des gaz brûlés du moteur à combustion interne (1), dans laquelle est disposé au moins un dispositif d'étranglement (6) selon l'une quelconque des revendications 1 à 8.
